# FASCICULE DE BREVET EUROPEEN

(11) **EP 2 414 774 B1**
(45) Date de publication et mention de la délivrance du brevet: **09.01.2013**
(21) Numéro de dépôt: 10715152.4
(22) Date de dépôt: 01.04.2010
(51) Int. Cl.: G01C 19/56

(54) **ELÉMENT VIBRANT SUR DEUX MODES DÉCOUPLÉS ET APPLICATION À UN GYROMÈTRE VIBRANT**
IN ZWEI ENTKOPPELTEN MODI SCHWINGENDES ELEMENT UND VERWENDUNG IN EINEM SCHWINGKREISEL
ELEMENT VIBRATING IN TWO UNCOUPLED MODES, AND USE IN VIBRATING RATE GYROSCOPE

(30) Priorité: 03.04.2009 FR 0952172
(43) Date de publication de la demande: 08.02.2012
(73) Titulaire: ONERA (Office National d'Etudes et de Recherches Aérospatiales), 92320 Châtillon (FR)
(72) Inventeur: JANIAUD, Denis, F-91940 Les Ulis (FR); LE TRAON, Olivier, F-91430 Vauhallan (FR); CHARTIER, Claude, F-91300 Massy (FR); MASSON, Stève, F-92350 - LE PLESSIS ROBINSON (FR); GUERARD, Jean, F-91260 Juvisy (FR); LEVY, Raphaël, F-75014 Paris (FR); PERNICE, Marc, F-94260 Fresnes (FR)
(74) Mandataire: Bloch, Gérard
(86) Numéro de dépôt international: PCT/EP2010/054443
(87) Numéro de publication internationale: WO 2010/112594

(56) Documents cités:
- EP-A1- 1 096 260
- EP-A2- 0 809 087
- EP-A2- 0 844 461
- EP-A2- 1 962 055
- DE-A1-102007 018 834
- US-A1- 2006 201 248

## Description

La présente invention concerne, de manière générale, des gyromètres vibrants utilisés pour mesurer la rotation d'un véhicule dans l'espace.

Plus particulièrement, l'invention a trait à une configuration d'élément vibrant en matériau piézoélectrique pour un tel gyromètre.

Le principe de fonctionnement d'un gyromètre vibrant est basé sur la détection des accélérations de Coriolis qui agissent sur un élément vibrant selon un premier mode de vibration utile, appelé mode pilote, lorsque cet élément est soumis à une rotation de vitesse angulaire Ω référencée par rapport à un repère inertiel dit galiléen. Les accélérations de Coriolis sont alternatives à la fréquence du premier mode utile et excitent un second mode de vibration utile transverse, appelé mode détecteur, et dont l'amplitude de vibration est proportionnelle à Ω. L'amplitude de vibration est convertie généralement sous forme de signaux électriques et mesurée pour déterminer Ω.

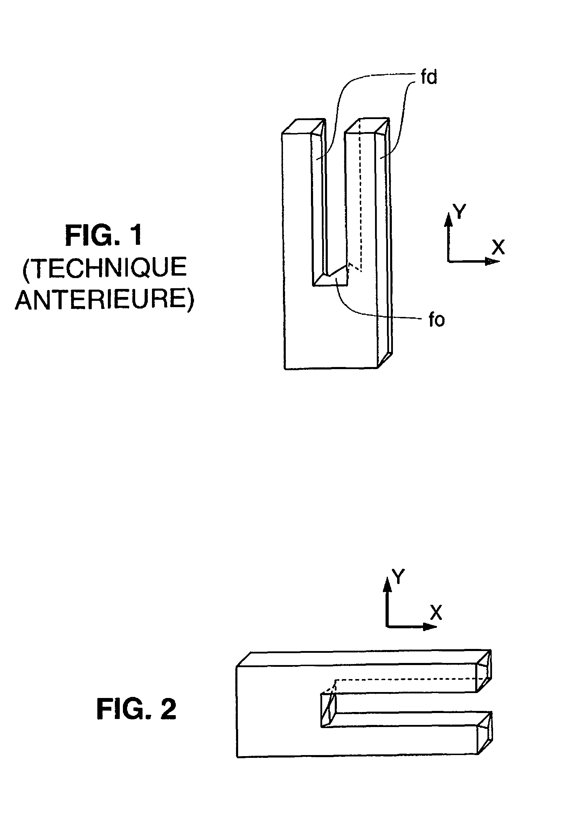

Il est connu **(**EP-A2-1 962 055 ; EP-A2-0 844 461**)** que l'élément vibrant peut être un diapason formé de deux branches identiques et parallèles, disposées en regard l'une de l'autre et solidaires, chacune à une extrémité, d'une partie commune, comme montrée à la figure 1. Le mode pilote est une vibration de résonance en flexion des deux branches en opposition de phase entre elles parallèlement au plan XY du diapason. Lorsque le diapason est soumis à une rotation autour d'un axe parallèle à l'axe longitudinal du diapason, le mode détecteur est une vibration de résonance en flexion des deux branches en opposition de phase entre elles perpendiculairement au plan XY du diapason.

Le diapason est réalisé par usinage chimique d'une plaque de quartz d'épaisseur uniforme dans un bain de gravure comprenant de l'acide fluorhydrique, ainsi qu'il est pratiqué pour les résonateurs horlogers. Le diapason bénéficie en premier lieu de l'excellente définition dimensionnelle des procédés photolithographiques, en deuxième lieu d'une excitation et d'une détection piézoélectriques aisées des deux modes utiles au moyen d'électrodes déposées sur le quartz, et en troisième lieu d'un coût de fabrication industrielle très réduit.

La plaque de quartz d'épaisseur uniforme est parallèle au plan cristallographique électrique et mécanique XY du quartz afin de faciliter l'usinage chimique. Les branches du diapason sont orientées suivant un axe cristallographique mécanique Y afin de permettre une bonne efficacité de l'excitation et de la détection piézoélectriques.

En contrepartie de ses avantages, l'usinage chimique du quartz provoque inévitablement l'apparition de facettes obliques par rapport aux axes cristallographiques principaux X et Y du diapason, comme montré de façon simplifiée à la **figure** 1. Des premières facettes obliques fo sont situées au pied des branches du diapason, à la naissance de la partie commune, et des secondes facettes obliques en forme de dièdre fd sont situées sur chacune des branches le long d'un flanc usiné, l'autre flanc usiné étant pratiquement plan et perpendiculaire au plan de la plaque. Ces facettes, dont les dimensions sont relativement importantes, sont très bien définies et reproductibles d'un usinage à l'autre, et ne présentent pas d'inconvénient lorsque le diapason fonctionne suivant un mode unique de vibration, comme c'est le cas des résonateurs horlogers, car elles peuvent facilement être prises en compte pour la définition géométrique de l'outillage photolithographique.

Par contre, lorsque le diapason est utilisé comme élément vibrant de gyromètre fonctionnant suivant deux modes de vibration utiles, les facettes obliques présentent l'inconvénient de créer un couplage mécanique entre ces modes de vibration utiles au sein de chaque poutre formant une branche du diapason. Ce couplage mécanique se traduit par l'apparition sur les électrodes de détection d'un signal électrique qui est en quadrature avec le signal de Coriolis et qu'il est nécessaire d'éliminer pour pouvoir déterminer la vitesse angulaire Ω.

Deux moyens sont connus pour éliminer ce signal en quadrature.

Le premier moyen connu met en oeuvre des circuits électroniques de traitement du signal qui visent à éliminer par démodulation synchrone le signal en quadrature. Le premier moyen est cependant insatisfaisant lorsqu'il faut mesurer des faibles vitesses de rotation, car le signal de Coriolis est alors très petit devant le signal en quadrature et il devient difficile de contrôler avec suffisamment de précision la phase des signaux électriques pour tirer parti de la démodulation synchrone.

Le second moyen connu pour éliminer le signal en quadrature consiste à agir directement sur l'élément vibrant, par exemple en effectuant une retouche d'usinage ("trimming" en anglais) au moyen d'un outil mécanique jusqu'à obtenir une réduction suffisante du signal électrique en quadrature présent sur les électrodes de détection, ainsi qu'il est expliqué dans le brevet U.S. 6,101,878. Le second moyen accroît notablement la précision de mesure du gyromètre, mais présente l'inconvénient d'augmenter le coût de fabrication puisque chaque exemplaire de gyromètre fabriqué doit subir une retouche d'usinage spécifique.

Afin de réduire le couplage mécanique sans effectuer de retouche d'usinage, il paraît intéressant d'orienter les branches du diapason suivant un autre axe que l'axe Y dans le plan XY de la plaque, par exemple suivant un axe cristallographique électrique X, comme montré à la **figure 2**. En effet, l'usinage chimique d'un diapason ainsi orienté produit des facettes obliques nettement réduites au pied des branches et ne produit aucune facette oblique le long des flancs usinés des branches. Le couplage mécanique obtenu au sein de chaque poutre d'un tel diapason est plus important que dans la réalisation précédente avec les branches orientées suivant l'axe Y. Cela est dû à l'anisotropie mécanique du quartz qui, pour les branches orientées suivant l'axe X, empêche que les vibrations des deux modes utiles soient indépendantes l'une de l'autre.

La présente invention vise à remédier à ces inconvénients liés à l'usinage chimique d'un diapason en quartz en fournissant d'autres configurations d'élément vibrant piézoélectrique de gyromètre pour que des facettes obliques issues de l'usinage chimique ne créent pratiquement pas de couplage mécanique entre les deux modes de vibration utiles au sein d'une poutre de l'élément vibrant ce qui est favorable à la précision de mesure du gyromètre.

A cette fin, un élément vibrant en matériau piézoélectrique usinable par voie chimique, présentant des premier et deuxième modes de vibration et ayant une structure monolithique d'épaisseur uniforme et plane parallèlement à un axe cristallographique électrique du matériau, et comportant une poutre sensiblement parallélépipédique supportant des électrodes aptes à participer à l'un des deux modes de vibration, une partie fixe solidaire de l'une des extrémités de la poutre, et une partie massive solidaire de l'autre extrémité de la poutre, la partie massive étant propre à être animée d'un déplacement alternatif parallèlement au plan de la structure monolithique suivant le deuxième mode de vibration, est caractérisé en ce que la structure présente un axe de symétrie parallèle à l'axe cristallographique électrique, et la partie massive a un centre de gravité situé sur l'axe de symétrie, et est propre à être animée d'une rotation alternative autour de l'axe de symétrie suivant le premier mode de vibration.

La symétrie de la structure de l'élément vibrant, y compris des facettes issues de l'usinage chimique de l'élément vibrant, par rapport à un axe parallèle à un axe cristallographique électrique du matériau piézoélectrique appartenant, comme le quartz, à la classe de symétrie cristalline 32 à réseau cristallin trigonal assure le découplage mécanique entre les premier et deuxième modes de vibration utiles de l'élément vibrant. La position du centre de gravité de la partie massive sur l'axe de symétrie peut conduire à ce que les deux modes utiles aient des fréquences de résonance sensiblement égales ce qui favorise la précision de la mesure d'une composante de la vitesse angulaire de la rotation à laquelle l'élément vibrant est susceptible d'être soumis.

Les électrodes de l'élément vibrant sont toutes supportées par la poutre, quel que soit le mode de vibration suivant lequel la partie massive est animée. Les électrodes sont aptes à participer à l'un des deux modes de vibration utiles de l'élément vibrant pour une configuration de gyromètre particulière selon l'invention, bien que dans une autre configuration, la poutre de l'élément vibrant supporte à la fois des électrodes pour exciter le premier mode de vibration de l'élément vibrant suivant lequel la partie massive est propre à être animée d'une rotation alternative autour de l'axe de symétrie et des électrodes pour détecter le deuxième mode de vibration de l'élément vibrant suivant lequel la partie massive est propre à être animée d'un déplacement alternatif parallèlement au plan de la structure monolithique.

Comme on le verra dans la suite de la description, deux réalisations d'élément vibrant selon l'invention sont fournies. Selon une première réalisation, la partie massive comprend deux branches symétriques par rapport à l'axe de symétrie et ayant des extrémités solidaires de ladite autre extrémité de la poutre, et le centre de gravité de la partie massive est situé sur l'axe de symétrie entre les extrémités de la poutre. Selon une deuxième réalisation, l'élément vibrant comporte une autre poutre supportant d'autres électrodes, les deux poutres étant sensiblement parallélépipédiques, symétriques par rapport à l'axe de symétrie et ayant des extrémités solidaires entre elles et de la partie fixe et d'autres extrémités solidaires de la partie massive; les poutres peuvent former un angle de 60° environ.

L'invention concerne également un gyromètre comportant quatre éléments vibrants selon l'invention, préservant la qualité de vibration des deux modes utiles des influences de la fixation du gyromètre. Le gyromètre comprend deux premiers éléments vibrants sensiblement identiques conformes à la première ou deuxième réalisation et supportant des électrodes pour participer au premier mode de vibration, et deux deuxièmes éléments vibrants sensiblement identiques conformes à la première ou deuxième réalisation et supportant des électrodes pour participer au deuxième mode de vibration. Dans le gyromètre, les parties fixes des éléments vibrants comprennent ensemble une partie commune centrale reliant des extrémités des poutres des premiers éléments vibrants et des extrémités des poutres des deuxièmes éléments vibrants, et des bras souples reliant la partie commune à une partie de fixation.

Bien que selon une variante le gyromètre puisse ne comprendre que deux éléments vibrants sensiblement identiques conformes à la première ou deuxième réalisation et supportant à la fois des électrodes pour participer respectivement au premier mode de vibration et au deuxième mode de vibration, la séparation des éléments vibrants en deux couples, dont les électrodes sont assignées respectivement à l'excitation du premier mode de vibration et à la détection du deuxième mode de vibration, assure un meilleur découplage entre les deux modes grâce notamment à la partie commune qui demeure sensiblement immobile pour les deux modes de vibration, ce qui confère davantage de précision à la mesure de la vitesse angulaire de la rotation.

Lorsque les éléments vibrants sont conformes à la première réalisation et ont chacun une poutre colinéaire à celle d'un autre élément vibrant,
des électrodes propres à participer au premier mode de vibration et supportées par chacune des faces de la poutre de chaque premier élément vibrant sont des première et deuxième électrodes longitudinales respectivement superposées à des deuxième et première électrodes sur l'autre face de la poutre et respectivement colinéaires à des première et deuxième électrodes sur l'autre premier élément vibrant, les quatre premières électrodes étant reliées entre elles et les quatre deuxièmes électrodes étant reliées entre elles, et
des électrodes propres à participer au deuxième mode de vibration et supportées par chacune des faces de la poutre de chaque deuxième élément vibrant sont des troisième et quatrième électrodes longitudinales respectivement superposées aux troisième et quatrième électrodes sur l'autre face de la poutre et respectivement colinéaires à des quatrième et troisième électrodes sur l'autre deuxième élément vibrant, les quatre troisièmes électrodes étant reliées entre elles et les quatre quatrièmes électrodes étant reliées entre elles.

Lorsque le gyromètre comporte deux premiers éléments vibrants sensiblement identiques qui sont conformes à la deuxième réalisation et ont chacun deux poutres, les poutres des premiers éléments vibrants étant deux à deux sensiblement colinéaires et supportant des électrodes pour participer au premier mode de vibration, et deux deuxièmes éléments vibrants sensiblement identiques qui sont conformes à la deuxième réalisation et ont chacun deux poutres, les poutres des deuxièmes éléments vibrants étant deux à deux sensiblement colinéaires et supportant des électrodes pour participer au deuxième mode de vibration, les électrodes sont réparties en des premières et deuxièmes électrodes propres à participer au premier mode de vibration et des troisièmes et quatrièmes électrodes propres à participer au deuxième mode de vibration.

Les faces d'une poutre de chaque premier élément vibrant supportent longitudinalement des premières électrodes parallèles et des deuxièmes électrodes parallèles. Une première électrode sur une face de la poutre de chaque premier élément vibrant est superposée à une deuxième électrode sur l'autre face de la poutre. Les premières électrodes sur deux poutres sensiblement colinéaires des premiers éléments vibrants sont sensiblement colinéaires deux à deux. Les deuxièmes électrodes sur deux poutres sensiblement colinéaires des premiers éléments vibrants sont sensiblement colinéaires deux à deux. Les huit premières électrodes sont reliées entre elles et les huit deuxièmes électrodes sont reliées entre elles.

Chacune des faces d'une poutre d'un deuxième élément vibrant supporte trois électrodes parallèles s'étendant longitudinalement. Lesdites trois électrodes d'une poutre sont deux troisièmes électrodes bordant les flancs de la poutre et une quatrième électrode située entre les troisièmes électrodes. Les quatre troisièmes électrodes sur les faces d'une poutre sont superposées deux à deux. Les deux quatrièmes électrodes sur les faces d'une poutre sont superposées. Les huit troisièmes électrodes sur deux premières poutres sensiblement colinéaires des deuxièmes éléments vibrants sont reliées et respectivement sensiblement colinéaires deux à deux. Les quatre quatrièmes électrodes sur les deux premières poutres des deuxièmes éléments vibrants sont reliées et respectivement sensiblement colinéaires deux à deux. Huit troisièmes électrodes et quatre quatrièmes électrodes sur deux deuxièmes poutres sensiblement colinéaires des deuxièmes éléments vibrants sont agencées de la même manière que les huit troisièmes électrodes et les quatre quatrièmes électrodes sur les premières poutres des deuxièmes éléments vibrants.

Les huit troisièmes électrodes sur les premières poutres des deuxièmes éléments vibrants sont reliées aux quatre quatrièmes électrodes des deuxièmes poutres des deuxièmes éléments vibrants. Les huit troisièmes électrodes sur les deuxièmes poutres des deuxièmes éléments vibrants sont reliées aux quatre quatrièmes électrodes des premières poutres des deuxièmes éléments vibrants.

En pratique, l'assignation du premier mode à l'un des couples d'éléments vibrants sensiblement identiques peut résulter de différences entre des dimensions et par conséquent de fréquences de résonance des premiers éléments vibrants et des deuxièmes éléments vibrants. L'excitation du premier mode par les électrodes des premiers éléments vibrants ne produit pas de vibration des deuxièmes éléments vibrants.

Le fonctionnement du gyromètre suivant le premier mode de vibration, par exemple en tant que mode pilote excité par les électrodes des premiers éléments vibrants, engendre les accélérations de Coriolis pour le fonctionnement suivant le deuxième mode de vibration des premiers éléments vibrants, en tant que mode détecteur, lorsque le gyromètre est sollicité par la rotation à mesurer. Quand les deuxièmes modes de vibration des premiers et deuxièmes éléments vibrants ont des fréquences de résonance sensiblement égales, le fonctionnement suivant le deuxième mode de vibration des premiers éléments vibrants est communiqué aux deuxièmes éléments vibrants dont les électrodes peuvent détecter le deuxième mode de vibration.

D'autres caractéristiques et avantages de la présente invention apparaîtront plus clairement à la lecture de la description suivante de plusieurs réalisations de l'invention données à titre d'exemples non limitatifs, en référence aux dessins annexés correspondants dans lesquels :
- la figure 1 est une vue en perspective d'un diapason selon la technique antérieure et déjà commenté ;
- la figure 2 est une vue en perspective d'un autre diapason inspiré de la technique antérieure et déjà commenté ;
- la figure 3A est une vue en perspective d'un élément vibrant selon une première réalisation de l'invention, réalisé par usinage chimique dans une plaque piézoélectrique ;
- les figures 3B et 3C sont des vues en perspective montrant des déformations exagérément agrandies de l'élément vibrant respectivement pour les deux modes de vibration utiles;
- la figure 4 est une vue en perspective d'un gyromètre selon l'invention, comportant quatre éléments vibrants similaires à celui de la figure 3A ;
- les figures 5A et 5B sont des vues en perspective montrant des déformations exagérément agrandies des éléments vibrants du gyromètre de la figure 4 pour le mode pilote et le mode détecteur, respectivement ;
- la figure 5C est une vue en perspective montrant des déformations exagérément agrandies des éléments vibrants du gyromètre de la figure 4 pour un autre mode de vibration particulier intéressant à prendre en compte dans le dimensionnement du gyromètre ;
- la figure 6 est une vue de face des éléments vibrants du gyromètre de la figure 4 montrant une disposition des électrodes d'excitation sélective du mode pilote et de détection sélective du mode détecteur ;
- la figure 7A est une vue en perspective d'un élément vibrant selon une deuxième réalisation de l'invention ;
- les figures 7B et 7C sont des vues en perspective montrant des déformations exagérément agrandies de l'élément vibrant de la figure 7A respectivement pour les deux modes de vibration utiles ;
- la figure 8 est une vue en perspective d'un autre gyromètre selon l'invention, comportant quatre éléments vibrants similaires à celui de la figure 7A ;
- les figures 9A et 9B sont des vues en perspective montrant des déformations exagérément agrandies des éléments vibrants du gyromètre de la figure 8 pour le mode pilote et le mode détecteur, respectivement ;
- la figure 9C est une vue en perspective montrant des déformations exagérément agrandies des éléments vibrants du gyromètre de la figure 8 pour un autre mode particulier intéressant à prendre en compte dans le dimensionnement du gyromètre ; et
- la figure 10 est une vue de face des éléments vibrants du gyromètre de la figure 8 montrant une disposition des électrodes d'excitation sélective du mode pilote et de détection sélective du mode détecteur.

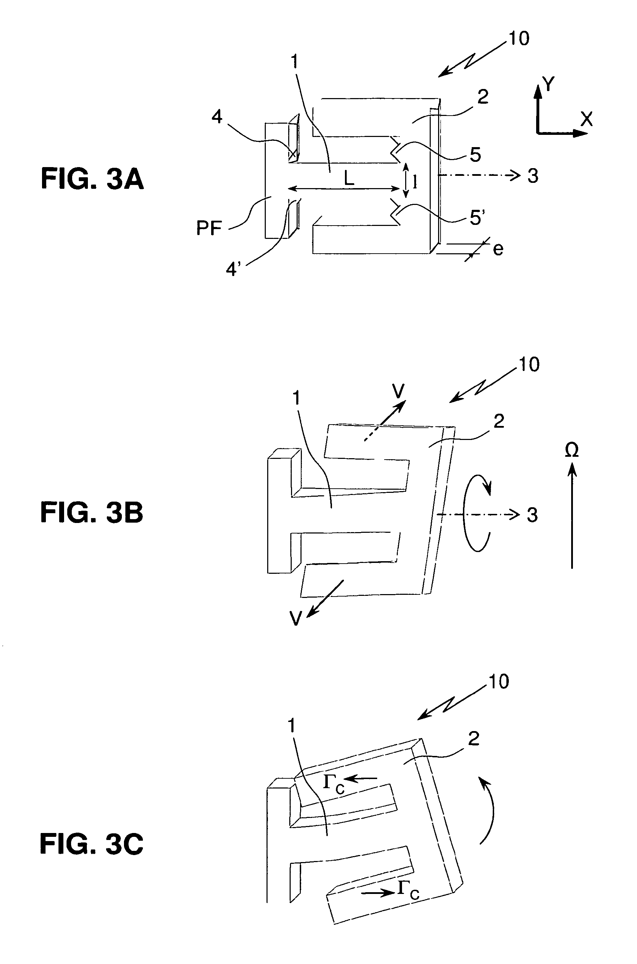

La figure 3A montre une première réalisation d'élément vibrant monolithique 10 selon l'invention, usiné dans une plaque plane de matériau piézoélectrique, tel que du quartz, ayant une épaisseur uniforme e. L'élément vibrant 10 comporte une poutre 1 sensiblement parallélépipédique, une partie fixe PF solidaire de l'une des extrémités de la poutre et une partie massive 2 solidaire de l'autre extrémité de la poutre. L'élément vibrant 10 est symétrique par rapport à l'axe longitudinal 3 de la poutre 1. La partie massive 2 est dimensionnée pour obtenir que son centre de gravité soit situé sur l'axe de symétrie longitudinal 3 de la poutre entre les deux extrémités de la poutre. Selon la figure 3A, la partie massive a la forme d'un U dont l'âme est solidaire de la poutre et perpendiculaire à celle-ci et dont les branches parallèles sont disposées de part et d'autre de la poutre 1. Plus généralement, la partie massive comprend deux branches symétriques par rapport à l'axe de symétrie 3 et ayant des extrémités solidaires de l'extrémité de la poutre non solidaire de la partie fixe PF. Selon d'autres exemples, la partie massive a la forme d'un vé ou d'un C dont les extrémités sont orientées vers la partie fixe.

La dimension de section 1 de la poutre 1 prise dans le plan de la plaque est sensiblement plus grande que son autre dimension de section e. De préférence, la dimension 1 est comprise entre 1,3 fois environ et 2 fois environ la dimension e. De préférence, la dimension de longueur L de la poutre 1 est comprise entre 4 fois environ et 5 fois environ la dimension e.

Toujours en référence à la figure 3A, la plaque est perpendiculaire à l'axe cristallographique optique Z du quartz et donc parallèle au plan cristallographique XY du quartz incluant les trois axes cristallographiques "électriques" et les trois axes cristallographiques "mécaniques" respectivement perpendiculaires aux axes électriques. Dans la figure 3A, seulement un axe cristallographique électrique désigné par X et un axe cristallographique mécanique désigné par Y sont représentés. L'axe longitudinal 3 de la poutre 1 est orienté suivant l'axe cristallographique électrique X. L'usinage chimique de l'élément vibrant 10 dans un bain de gravure comprenant de l'acide fluorhydrique provoque l'apparition de facettes obliques 4 et 4' à l'extrémité de la poutre 1 solidaire de la partie fixe PF, et de facettes obliques 5 et 5' à l'autre extrémité solidaire de l'âme de la partie massive 2 en U. Aucune facette en forme de dièdre n'apparaît sur les flancs usinés de la poutre puisqu'elle est orientée suivant l'axe X. Les facettes 4 et 4' sont respectivement symétriques l'une de l'autre par rapport à l'axe longitudinal 3 de la poutre, et les facettes 5 et 5' sont respectivement symétriques l'une de l'autre par rapport à l'axe longitudinal 3 de la poutre. La symétrie entre les facettes est due à l'orientation de la poutre suivant l'axe X du quartz et à la nature du bain de gravure comprenant de l'acide fluorhydrique. L'élément vibrant 10 réalisé par usinage chimique a ainsi un axe de symétrie confondu avec l'axe longitudinal 3 de la poutre et parallèle à l'axe X. Si l'axe longitudinal 3 de la poutre était orienté suivant un axe cristallographique mécanique Y du quartz, ou plus généralement suivant toute direction différente d'un axe cristallographique électrique X dans le plan cristallographique XY de la plaque, les flancs de la poutre comporteraient des facettes dissymétriques.

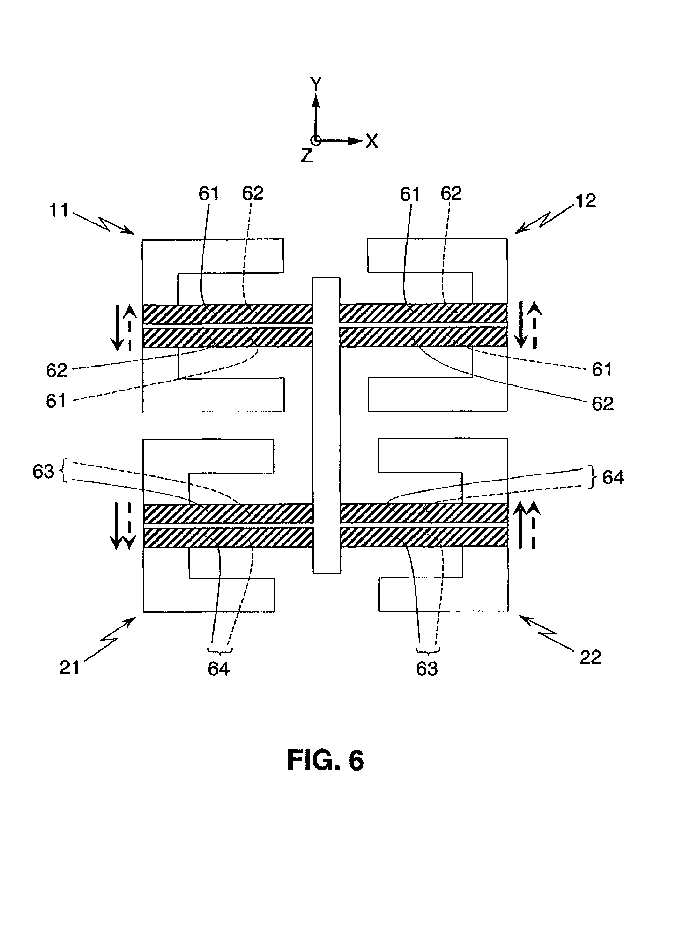

Les **figures 3B et 3C** montrent des déformations exagérément agrandies de l'élément vibrant 10 pour les deux modes de vibration utiles respectivement, et associées à des positions appropriées d'électrodes sur les faces de la poutre, comme on le verra ci-après en référence à la figure 6. Les facettes obliques ne sont pas représentées sur les figures 3B et 3C.

Pour le premier mode de vibration utile représenté sur la figure 3B, la poutre 1 subit une déformation alternative en torsion autour de l'axe de symétrie longitudinal 3. La partie massive 2 est animée d'une rotation alternative autour dudit axe de symétrie longitudinal et ne subit pratiquement pas de déformation.

Pour le second mode de vibration utile représenté sur la figure 3C, la poutre 1 subit une déformation alternative en flexion parallèlement au plan XY de la plaque. La partie massive 2 est animée d'un déplacement alternatif parallèlement audit plan, et ne subit pratiquement pas de déformation.

Chacun de ces deux modes de vibration utiles peut être utilisé comme mode pilote, l'autre mode utile étant alors utilisé comme mode détecteur. Par exemple selon les représentations illustrées aux figures 3B et 3C, lorsqu'une vitesse angulaire Ω à laquelle l'élément vibrant 10 est soumis, ou une composante de la vitesse angulaire, est parallèle au plan XY de la plaque et perpendiculaire à l'axe de symétrie 3, et lorsque le premier mode utile est le mode pilote, qui génère des vitesses V alternatives perpendiculaires au plan XY de la plaque, lesdites vitesses V se combinent à la vitesse de rotation Ω pour créer les accélérations de Coriolis Γ_{c} qui excitent le second mode utile. Dans cet exemple, l'élément vibrant selon l'invention est sensible à une rotation de vitesse Ω autour d'un axe parallèle au plan de la plaque et perpendiculaire à l'axe longitudinal de la poutre.

Le choix de ces deux modes de vibration utiles combiné à la symétrie de l'élément vibrant par rapport à un axe parallèle à l'axe X du quartz, engendre pratiquement un découplage mécanique entre les deux modes. Les deux modes de vibration utiles ne seraient pas indépendants si pour l'un d'eux la partie massive était animée par exemple d'un déplacement alternatif perpendiculairement au plan de la plaque, ou si l'élément vibrant ne présentait pas ladite symétrie.

Par ailleurs, la position du centre de gravité de la partie massive 2 sur l'axe longitudinal 3 de la poutre et les intervalles précités des rapports l/e et L/e contribuent à ce que les fréquences de résonance des deux modes utiles soient proches l'une de l'autre, écartées par exemple de 1% environ en valeur relative, c'est-à-dire soient sensiblement égales, ce qui est favorable à la précision de la mesure gyrométrique.

L'invention n'est pas limitée à la première réalisation d'élément vibrant 10 décrite ci-dessus, obtenue par usinage chimique d'une plaque de quartz parallèle au plan cristallographique XY, et conciliant un faible coût de fabrication et la quasi-absence de couplage mécanique entre les deux modes utiles. La portée de l'invention s'étend à d'autres types d'usinages, de matériaux piézoélectriques et d'orientations cristallographiques, comme expliqué ci-après.

S'agissant de l'usinage, celui-ci doit respecter la symétrie de la structure de l'élément vibrant par rapport à l'axe longitudinal 3 de la structure, en l'occurrence celui de la poutre 1. Par exemple, l'usinage est par ultrason ou par gravure plasma.

S'agissant du matériau piézoélectrique, celui-ci doit appartenir à la même classe de symétrie cristalline que le quartz, c'est-à-dire la classe de symétrie 32 à réseau cristallin trigonal. Par exemple, le matériau piézoélectrique peut être un matériau de synthèse tel que l'orthophosphate de gallium GaPO₄, ou appartenant à la famille des langasites (LGS) ou celle des langanites (LGN) ou celle des langatates (LGT). Tous ces matériaux piézoélectriques possèdent au moins un couple d'axes cristallographiques électrique X et mécanique Y perpendiculaires à un axe cristallographique optique Z.

S'agissant de l'orientation de la plaque par rapport aux axes cristallographiques, le plan de la plaque doit être parallèle à l'axe X. L'orientation de la plaque peut ainsi être vue comme se déduisant de l'orientation XY par une rotation d'un angle θ autour de l'axe X. L'angle θ peut être choisi pour optimiser le comportement des fréquences des deux modes utiles lors de variations de température.

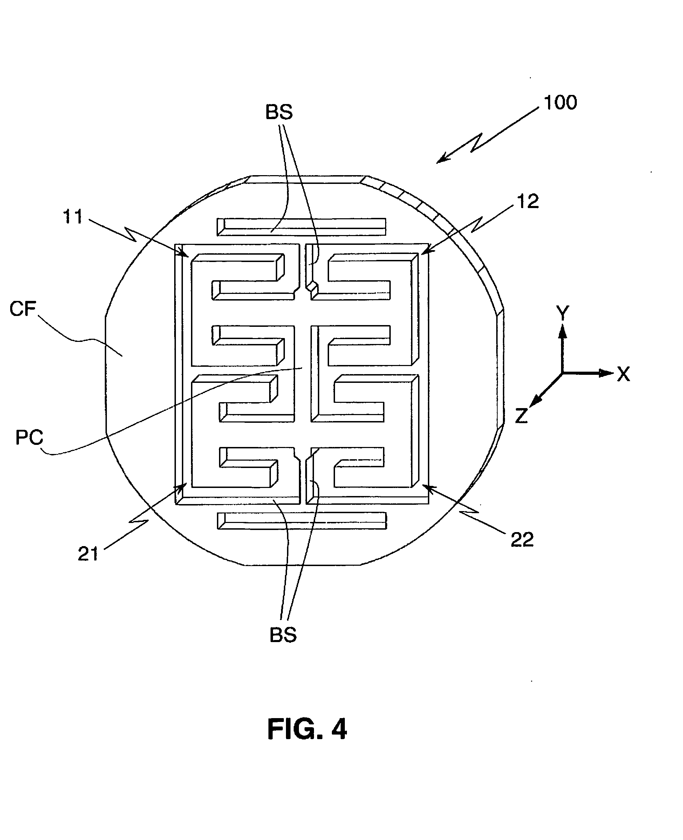

L'invention concerne également un gyromètre comportant quatre éléments vibrants selon la première réalisation, pour préserver la qualité de vibration des deux modes utiles des influences de la fixation du gyromètre. Un exemple de réalisation dudit gyromètre est expliqué en référence aux figures 4, 5A, 5B, 5C et 6 sur lesquelles les facettes obliques ne sont pas représentées.

En référence à **la** **figure 4**, un gyromètre monolithique 100 selon l'invention comprend quatre éléments vibrants 11, 12, 21 et 22 similaires à celui 10 montré à la figure 3A. Les parties fixes des éléments vibrants sont regroupées en un ensemble comprenant une partie commune centrale PC sous la forme d'un barreau s'étendant perpendiculairement aux axes longitudinaux des poutres des quatre éléments vibrants et reliant des extrémités solidaires des poutres des premiers éléments vibrants 11 et 12 à des extrémités solidaires des poutres des deuxièmes éléments vibrants 21 et 22, deux ensembles de bras souples BS en forme de T dont les jambes sont coaxiales longitudinalement à la partie commune et reliées aux extrémités de celle-ci, et un cadre de fixation CF relié à la partie commune par les bras souples. La partie commune PC n'est pas fixée contrairement à la partie fixe PF de l'élément vibrant 10 montré à la figure 3A. Cependant, ainsi qu'il sera expliqué plus loin, la partie commune PC reste spontanément pratiquement immobile pour les modes utiles de vibration du gyromètre 100. De même que l'élément vibrant 10 illustré à la figure 3A, le gyromètre 100 est réalisé dans une plaque plane de matériau piézoélectrique, tel que du quartz, parallèle à l'axe cristallographique électrique X, en l'espèce parallèle au plan cristallographique XY, et d'épaisseur uniforme, par exemple par usinage chimique.

Les premiers éléments vibrants 11 et 12 sont disposés de part et d'autre de la partie commune PC et les axes longitudinaux de leurs poutres sont colinéaires. Les éléments vibrants 11 et 12 sont sensiblement identiques et ont de ce fait une fréquence commune F1 pour leur premier mode utile et une fréquence commune F2 pour leur second mode utile. Les facettes obliques (non représentées) dues à l'usinage chimique du matériau piézoélectrique n'étant pas identiques pour les éléments 11 et 12, il peut être avantageux de modifier légèrement l'outillage photolithographique pour obtenir une symétrie suffisante des éléments vibrants 11 et 12 par rapport à l'axe longitudinal de la partie commune PC perpendiculaire à l'axe X et donc une identité suffisante des comportements dynamiques des éléments vibrants 11 et 12 et un équilibre de ceux-ci par rapport à l'axe longitudinal de la partie commune. Il en est de même pour l'équilibre des deuxièmes éléments vibrants 21 et 22 par rapport à l'axe longitudinal de la partie commune PC. De plus, les éléments vibrants 11 et 12 sont dimensionnés pour que les fréquences F1 et F2 soient proches l'une de l'autre, écartées par exemple de 1% environ en valeur relative.

Les éléments vibrants 21 et 22 sont disposés de part et d'autre de la partie commune PC et les axes longitudinaux de leurs poutres sont colinéaires. Les éléments vibrants 21 et 22 sont sensiblement identiques entre eux, mais peuvent être différents des éléments 11 et 12. Par exemple comme cela apparaît à la figure 4, les éléments 21 et 22 ont des poutres de longueur différente de celle des poutres des éléments 11 et 12, ainsi que des parties massives en forme de U de dimensions différentes de celles des parties massives des éléments 11 et 12. Les éléments vibrants 21 et 22 sont dimensionnés pour que la fréquence commune F'1 de leur premier mode utile soit nettement différente de F1, c'est-à-dire pour que l'écart entre F1 et F'1 soit d'au moins 10% environ en valeur relative, et que la fréquence commune F'2 de leur second mode utile soit sensiblement égale à F2. Ces relations entre fréquences sont obtenues par exemple en agissant à la fois sur les trois paramètres dimensionnels des éléments vibrants : la longueur de la poutre, la longueur des branches de la partie massive, et la largeur de section d'une portion de ladite partie massive prise dans le plan de la plaque, telle que la largeur de section de l'âme d'un U.

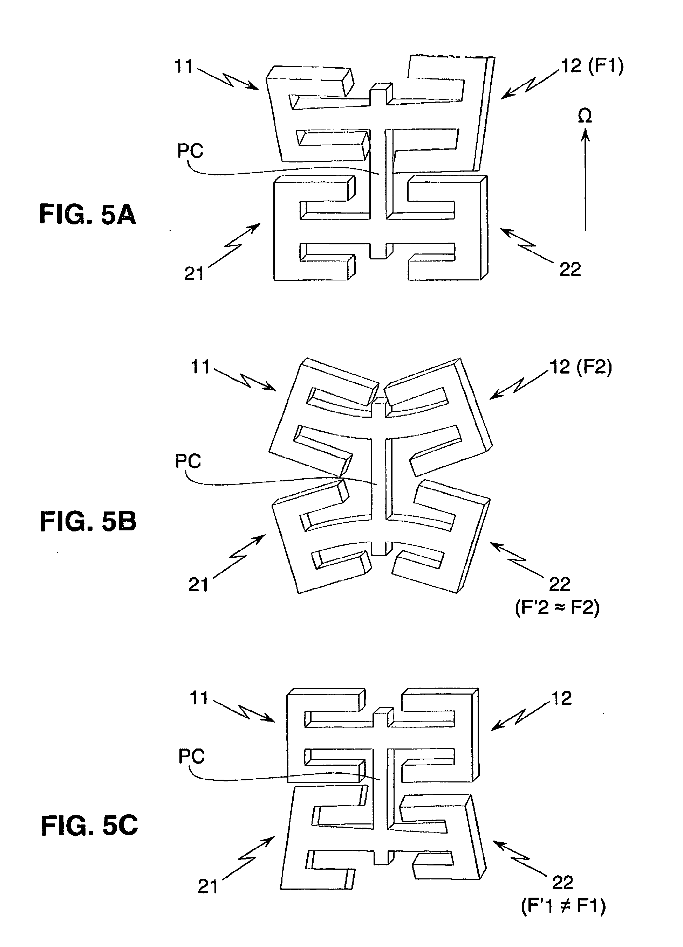

Ainsi, le gyromètre 100 présente trois modes particuliers de vibration, ainsi qu'illustré aux figures 5A, 5B et 5C limitées aux quatre éléments vibrants et à leur partie commune PC.

Le premier mode de vibration particulier illustré à **la** **figure 5A** est le mode pilote du gyromètre 100 et ne met pratiquement en mouvement que les deux premiers éléments 11 et 12 vibrant en opposition de phase entre eux suivant leur premier mode utile à la fréquence F1. Les efforts alternatifs de torsion produits par les poutres des éléments vibrants 11 et 12 s'équilibrent dans la zone de la partie commune PC solidaire des poutres des éléments 11 et 12 qui ne communiquent aucun déplacement aux deuxièmes éléments vibrants 21 et 22, les fréquences F1 et F'1 étant nettement différentes.

Le deuxième mode de vibration particulier illustré à la **figure 5B** est le mode détecteur du gyromètre 100 et met en mouvement les quatre éléments vibrant sur leur second mode utile à la fréquence F2 proche de F1, les éléments 11 et 12 vibrant en opposition de phase respectivement avec les éléments 21 et 22. Les efforts alternatifs de flexion produits par les quatre poutres s'équilibrent dans la portion de partie commune située entre les extrémités solidaires des poutres des éléments 11 et 12 et les extrémités solidaires des poutres des éléments 21 et 22.

De même qu'expliqué précédemment pour un seul élément vibrant selon l'invention en relation avec les figures 3A, 3B et 3C, le gyromètre 100 comprenant quatre éléments vibrants est sensible à une rotation de vitesse angulaire Ω à laquelle le gyromètre est soumis, autour d'un axe parallèle au plan de la plaque et perpendiculaire aux axes longitudinaux des poutres. Par ailleurs, il n'y a pratiquement pas de couplage mécanique entre le mode pilote et le mode détecteur du gyromètre 100, puisque les deux modes utiles de chacun des quatre éléments vibrants sont pratiquement découplés. Par contre, l'action des accélérations de Coriolis est moins directe que pour l'élément vibrant unique montré aux figures 3B et 3C. Dans le cas du gyromètre 100, les vitesses alternatives générées par le mode pilote ne concernent que les éléments 11 et 12, et donc les accélérations de Coriolis induites par la rotation à mesurer ne s'appliquent qu'à ces seuls éléments 11 et 12 qui sont ainsi mis en vibration. Du fait que les quatre éléments vibrants ont sensiblement la même fréquence commune F2 pour leur second mode utile, la vibration des éléments 11 et 12 provoque spontanément la vibration en opposition de phase des éléments 21 et 22, de même que, s'agissant d'un diapason à deux branches, l'excitation d'une seule branche au voisinage de la résonance du diapason provoque spontanément la mise en vibration des deux branches.

Enfin, le troisième mode de vibration particulier, illustré à la **figure 5C**, ne met pratiquement en mouvement que les deuxièmes éléments 21 et 22 vibrant en opposition de phase entre eux à la fréquence F'1 nettement différente de F1. Ce troisième mode particulier n'est pas un mode utile du gyromètre 100, mais il est néanmoins intéressant à prendre en compte dans le dimensionnement du gyromètre 100 car plus sa fréquence F'1 est écartée de la fréquence F1 du mode pilote du gyromètre 100, plus les premier et troisième modes particuliers sont indépendants l'un de l'autre. Un écartement d'au moins 10% environ en valeur relative entre F1 et F'1 permet d'obtenir une indépendance suffisante pour que les vibrations de chacun des premier et troisième modes particuliers ne concernent pratiquement que deux des quatre éléments, ainsi que représenté sur les figures 5A et 5C.

On notera que pour les trois modes de vibration particuliers la partie commune reste spontanément pratiquement immobile. Dans ces conditions, en référence à la figure 4, les bras souples BS permettent de filtrer efficacement des petits déplacements alternatifs résiduels de la partie commune et ainsi de ne transmettre au cadre de fixation CF que des efforts alternatifs pratiquement négligeables. Il en résulte que le cadre de fixation CF reste spontanément immobile et sa fixation sur une embase de boîtier ne vient pas altérer la qualité de vibration des modes utiles du gyromètre 100. A titre d'exemple, il est possible de réaliser un tel gyromètre selon l'invention dans une pastille de quartz de diamètre 9 mm et d'épaisseur 0,4 mm, et dont les deux modes de vibration utiles ont des fréquences voisines de 35 kHz et des coefficients de qualité supérieurs à 200 000.

Il pourrait paraître intéressant, pour éloigner encore davantage la fréquence F'1 du troisième mode particulier illustré à la figure 5C de la fréquence F1 du premier mode de vibration illustré à la figure 5A, que les parties massives des éléments vibrants 21 et 22 ne comprennent pas deux branches symétriques, mais soient plus compactes, par exemple de forme carrée ou rectangulaire, les parties massives des éléments vibrants 11 et 12 conservant leurs deux branches symétriques. Théoriquement, cela n'empêcherait pas de dimensionner les quatre éléments vibrants pour que la partie commune reste spontanément pratiquement immobile pour le deuxième mode particulier. Dans la pratique, cet équilibrage serait délicat à obtenir car les tolérances de fabrication seraient plus serrées que dans le cas illustré à la figure 4 où les quatre éléments vibrants ont des formes similaires.

S'agissant de l'excitation et de la détection piézoélectriques des deux modes de vibration utiles du gyromètre 100, des électrodes adhérentes au matériau piézoélectrique sont disposées sur les deux grandes faces de la plaque. Comme montré à la figure 6, les électrodes sont réparties en deux systèmes d'électrodes d'excitation 61 et 62 principalement sur les poutres des éléments vibrants 11 et 12 et deux systèmes d'électrodes de détection 63 et 64 principalement sur les poutres des éléments vibrants 21 et 22. Aucune électrode n'est supportée par les branches des U des parties massives 2 des éléments vibrants. La **figure 6** montre une disposition des électrodes sur l'une desdites grandes faces, la disposition des électrodes sur l'autre grande face étant géométriquement identique mais pouvant selon le mode utile considéré se différencier par des polarités électriques différentes, ainsi qu'il est expliqué dans ce qui suit. Afin de faciliter la compréhension du dessin, les électrodes référencées à l'aide d'un trait de référence en pointillé sont situées sur l'autre grande face.

Sur chacune des deux grandes faces et pour chacun des éléments vibrants 11 et 12, 21 et 22, les électrodes 61 et 62, 63 et 64 sont sous la forme de deux rubans conducteurs sensiblement identiques s'étendant parallèlement à l'axe longitudinal de la poutre de l'élément vibrant et couvrant toute la grande face de la poutre à l'exception d'une bande médiane séparant lesdits deux rubans. De préférence, ainsi que représenté à la figure 6, les deux rubans se prolongent sur l'âme de la partie massive en forme de U de l'élément vibrant. De préférence, la largeur de la bande médiane séparant les deux rubans est inférieure à 10% de la dimension de section de la poutre prise dans le plan de la plaque.

Pour chacune des deux grandes faces, quatre connexions électriques (non représentées) relient respectivement les électrodes colinéaires 61 des éléments vibrants 11 et 12, les électrodes colinéaires 62 des éléments vibrants 11 et 12, les électrodes désalignées 63 des éléments vibrants 21 et 22, et les électrodes désalignées 64 des éléments vibrants 21 et 22.

Pour chacun des éléments vibrants 11 et 12, deux connexions électriques (non représentées) relient respectivement les électrodes 61 non superposées sur les grandes faces et les électrodes 62 non superposées sur les grandes faces. Pour chacun des éléments vibrants 21 et 22, deux connexions électriques (non représentées) relient respectivement les électrodes 63 superposées sur les grandes faces et les électrodes 64 superposées sur les grandes faces.

Les systèmes des électrodes d'excitation 61 et 62 situés sur les éléments vibrants 11 et 12 sont aptes à exciter sélectivement le mode pilote du gyromètre 100 illustré à la figure 5A en exploitant la répartition de la contrainte de cisaillement T_{XY} propre à la torsion des poutres des éléments vibrants 11 et 12 autour de leur axe longitudinal et liée par effet piézoélectrique à des composantes opposées E_{Y} d'un champ électrique alternatif sur les faces principales des poutres, lorsque les électrodes 61 et 62 sont connectées respectivement aux bornes d'un circuit oscillateur électronique (non représenté). Pour le mode pilote, la contrainte T_{XY} exploitée est la contrainte principale de la vibration de torsion, et un minimum de tension électrique appliquée entre les électrodes 61 et 62 agit de façon optimale pour exciter le mode pilote.

Les systèmes des électrodes 63 et 64 situés sur les éléments vibrants 21 et 22 sont aptes à détecter sélectivement le mode détecteur du gyromètre 100 illustré à la figure 5B en exploitant la répartition de la contrainte de cisaillement T_{XY} propre à la flexion des poutres des éléments vibrants 21 et 22 parallèlement au plan XY de la plaque et liée par effet piézoélectrique à des composantes E_{Y} de même sens d'un champ électrique alternatif sur les faces principales des poutres, lorsque les électrodes 63 et 64 sont connectées respectivement aux bornes de polarités opposées d'un circuit capacitif de détection de tension électrique (non représenté). Pour le mode détecteur, la contrainte T_{XY} exploitée est plusieurs fois inférieure à la contrainte mécanique principale T_{XX} d'extension-compression des fibres longitudinales alternativement tendues et comprimées des poutres vibrant en flexion, ladite contrainte mécanique principale T_{XX} étant difficile à exploiter compte tenu du tenseur des coefficients piézoélectriques du quartz et de l'orientation des poutres suivant l'axe X.

La sélectivité de l'excitation du mode pilote et de la détection du mode détecteur, combinée au découplage mécanique entre ces deux modes de vibration, permet qu'en l'absence de rotation Ω appliquée au gyromètre 100 la vibration du mode pilote ne génère pas par effet piézoélectrique l'apparition de charges électriques sur les électrodes de détection 63 et 64.

De plus, la distance relativement importante entre les électrodes d'excitation 61 et 62 et les électrodes de détection 63 et 64 permet qu'un potentiel électrique alternatif d'excitation présent sur l'une au moins des électrodes 61 et 62 ne génère pratiquement pas par effet électrostatique l'apparition de charges électriques sur les rubans 63 et 64.

Ainsi, les charges électriques apparaissant sur les électrodes 63 et 64 ne proviennent pratiquement que de la rotation à mesurer, ce qui conduit le gyromètre 100 à délivrer une mesure précise de l'amplitude de vibration du mode détecteur proportionnelle à la vitesse angulaire de rotation Ω. En outre, le gyromètre 100 est facile à fabriquer par usinage chimique puisqu'il ne nécessite pas de retouche d'usinage contrairement au gyromètre connu présenté dans le préambule de la description.

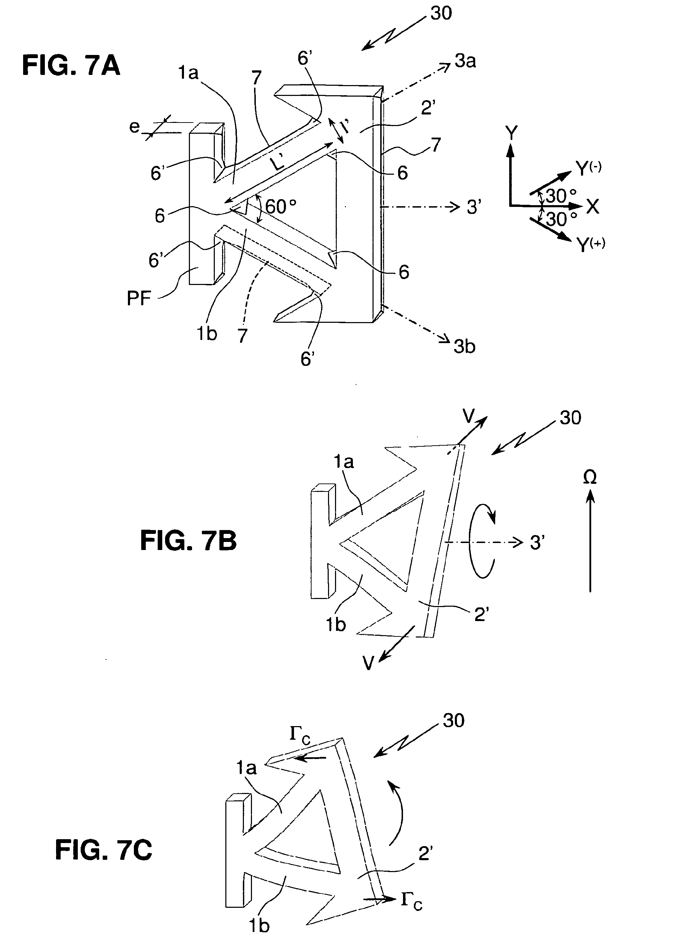

La **figure 7A** montre une deuxième réalisation d'élément vibrant monolithique 30 selon l'invention, permettant d'augmenter les charges électriques induites par la rotation à mesurer, et ainsi d'améliorer encore la précision de la mesure gyrométrique. Cette augmentation des charges électriques sera expliquée plus loin en relation avec la description d'un gyromètre comportant quatre éléments vibrants similaires à l'élément vibrant 30.

L'élément vibrant 30, usiné dans une plaque plane de matériau piézoélectrique, tel que du quartz, ayant une épaisseur uniforme e, comporte deux poutres la et lb parallélépipédiques de dimensions sensiblement identiques et ayant des extrémités solidaires entre elles dont les axes longitudinaux 3a et 3b forment un angle de 60° environ, une partie fixe PF' solidaire des extrémités solidaires des poutres au sommet dudit angle, et une partie massive 2' solidaire des autres extrémités des poutres la et lb et ayant la forme générale d'un barreau avec des extrémités pointues orientées vers la partie fixe. L'élément vibrant 30 est symétrique par rapport à un axe longitudinal 3' bissecteur de l'angle entre les axes longitudinaux 3a et 3b des poutres. La partie massive 2' et les deux poutres la et lb forment le contour d'un triangle sensiblement équilatéral. Ainsi, les deux poutres 1a et 1b peuvent être vues comme se substituant à la poutre 1 dans l'élément vibrant 10 montré à la figure 3A. Comme pour la première réalisation, la partie massive 2' peut être conformée avec diverses formes de branches symétriques aux extrémités d'un barreau rectiligne ou incurvé symétriquement par rapport à l'axe 3'.

Toujours en relation avec la figure 7A, la dimension de section 1' de chacune des poutres la et lb prise dans le plan de la plaque est sensiblement plus grande que son autre dimension de section e. De préférence, la dimension l'est comprise entre 1,1 fois environ et 1,5 fois environ la dimension e. De préférence, la dimension de longueur L' de chacune des poutres est comprise entre 4 fois environ et 6 fois environ la dimension e.

De même que pour l'élément vibrant 10 montré à la figure 3A, la plaque est parallèle au plan cristallographique XY du quartz et l'axe de symétrie 3' est orienté suivant l'un des axes cristallographiques électriques du quartz désigné par X. Compte tenu de la symétrie ternaire du quartz qui exprime que le motif cristallin de celui-ci se répète tous les 120° autour de l'axe optique Z dans le plan XY de la plaque, les axes longitudinaux 3a et 3b des poutres la et lb sont respectivement orientés parallèlement aux deux axes cristallographiques mécaniques autres que l'axe représenté Y orthogonal à l'axe X parallèle à l'axe de symétrie 3' et, comme représenté à la figure 7A, l'une lb des poutres est tournée vers le sens positif de l'axe Y et l'autre poutre la est tournée vers le sens négatif de l'axe Y. L'usinage chimique de l'élément vibrant 30 dans un bain de gravure comprenant de l'acide fluorhydrique provoque l'apparition de facettes obliques 6 et 6' et de facettes sous forme de dièdres 7. Les facettes obliques 6 sont localisées aux sommets de dièdres de 60° internes à une lumière triangulaire entre les poutres 1a et 1b et la partie massive 2'. Les facettes obliques 6' sont localisées aux sommets de dièdres de 60° entre les poutres 1a et 1b et la partie fixe PF' et entre les poutres 1a et 1b et les extrémités pointues de la partie massive 2'. Les facettes 7 sont localisées le long de flancs des poutres 1a et 1b et de la partie massive 2' situés à l'extérieur du triangle équilatéral formé par lesdites poutres et ladite partie massive. La disposition de ces facettes obliques et de ces dièdres est symétrique par rapport à l'axe 3'. La symétrie entre les facettes est due à l'orientation de l'axe 3' suivant l'axe X du quartz et à la nature du bain de gravure comprenant de l'acide fluorhydrique.

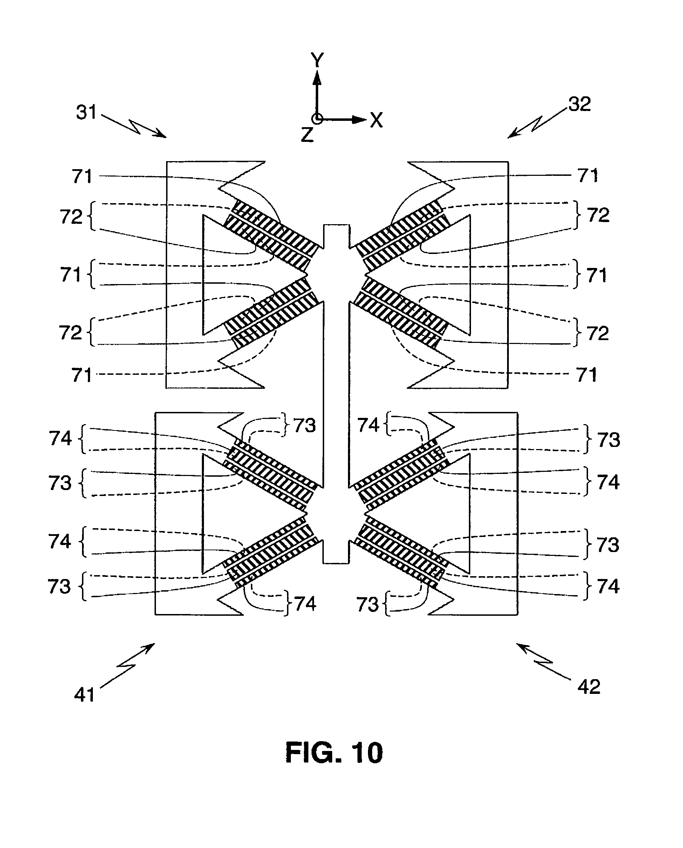

Les **figures 7B et 7C** montrent des déformations exagérément agrandies de l'élément vibrant 30 pour les deux modes de vibration utiles respectivement et associées à des positions appropriées d'électrodes sur les faces des poutres, comme on le verra ci-après en référence à la figure 10. Les facettes obliques ne sont pas représentées sur les figures 7B et 7C.

Pour le premier mode de vibration utile représenté sur la figure 7B, les poutres 1a et 1b subissent principalement des déformations alternatives en flexion perpendiculairement au plan de la plaque et, dans une moindre mesure, des déformations alternatives en torsion autour de leurs axes longitudinaux. La partie massive 2' est animée d'une rotation alternative autour de l'axe de symétrie 3' de l'élément vibrant et donc de vitesses alternatives V perpendiculaires au plan XY de la plaque et ne subit pratiquement pas de déformation.

Pour le second mode de vibration utile représenté sur la figure 7C, les poutres 1a et 1b subissent des déformations alternatives en flexion parallèlement au plan XY de la plaque. La partie massive 2' est animée d'un déplacement alternatif parallèlement audit plan et ne subit pratiquement pas de déformation.

De même que pour l'élément vibrant 10 représenté aux figures 3B et 3C, l'élément vibrant 30 est sensible à une rotation de vitesse angulaire Ω autour d'un axe parallèle au plan de la plaque et perpendiculaire à l'axe de symétrie 3' de l'élément vibrant.

De même que pour l'élément vibrant 10, le choix des deux modes de vibration utiles de l'élément vibrant 30, combiné à la symétrie de l'élément vibrant par rapport à un axe parallèle à l'axe X du quartz, permet qu'il n'y ait pratiquement pas de couplage mécanique entre les deux modes. Si la vitesse angulaire Ω est nulle, l'excitation de l'élément vibrant 30 selon le premier mode n'engendre pas le second mode.

De même que pour l'élément vibrant 10, la position du centre de gravité de la partie massive 2' sur l'axe de symétrie 3' et les intervalles précités des rapports l'/e et L'/e contribuent à ce que les fréquences de résonance des deux modes utiles de l'élément vibrant 30 soient proches l'une de l'autre, écartées par exemple de 1% en valeur relative, ce qui est favorable à la précision de la mesure gyrométrique.

De même que pour l'élément vibrant 10, la portée de l'invention s'étend aux types d'usinage qui permettent de respecter la symétrie de l'élément vibrant 30 par rapport à son axe de symétrie 3', aux matériaux piézoélectriques appartenant à la même classe de symétrie cristalline 32 que le quartz, et aux orientations de la plaque se déduisant de l'orientation cristallographique XY par une rotation d'un angle θ autour de l'axe X.

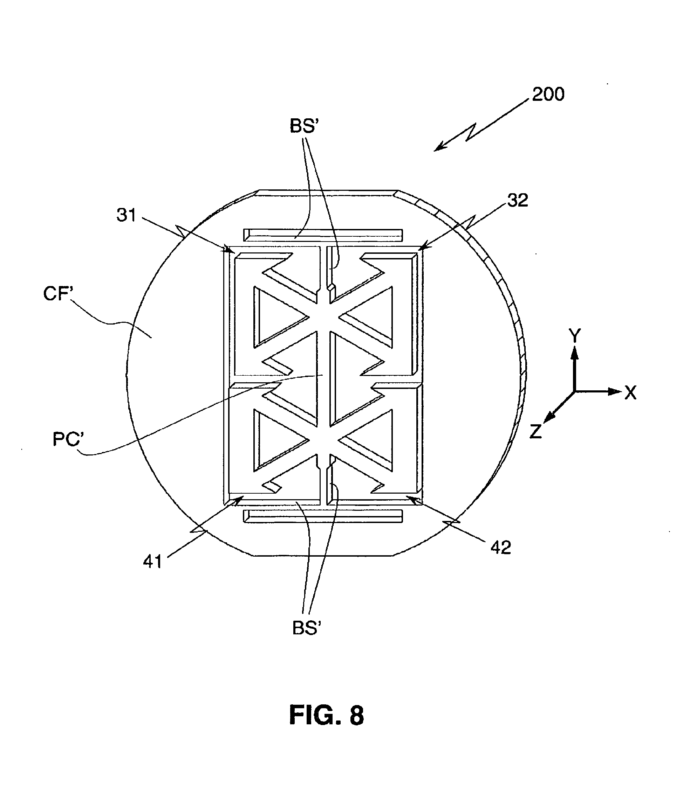

L'invention concerne également un gyromètre monolithique comportant quatre éléments vibrants 31, 32, 41 et 42 similaires à l'élément vibrant 30 selon la deuxième réalisation, pour préserver la qualité de vibration des deux modes utiles des influences de la fixation du gyromètre. La conformation d'un tel gyromètre 200, illustrée à la **figure 8**, est analogue à celle du gyromètre 100 illustré à la figure 4 en ce qui concerne la disposition des quatre éléments vibrants 31, 32, 41 et 42, de la partie commune PC', des bras souples BS' et du cadre de fixation CF'. Les éléments vibrants 31 et 32 sont sensiblement identiques, mais peuvent être différents des éléments 41 et 42 qui sont sensiblement identiques. Les poutres des éléments 31 et 32 sont sensiblement colinéaires longitudinalement deux à deux et forment ensemble une croix. De même, Les poutres des éléments 41 et 42 sont sensiblement colinéaires longitudinalement deux à deux et forment ensemble une croix.

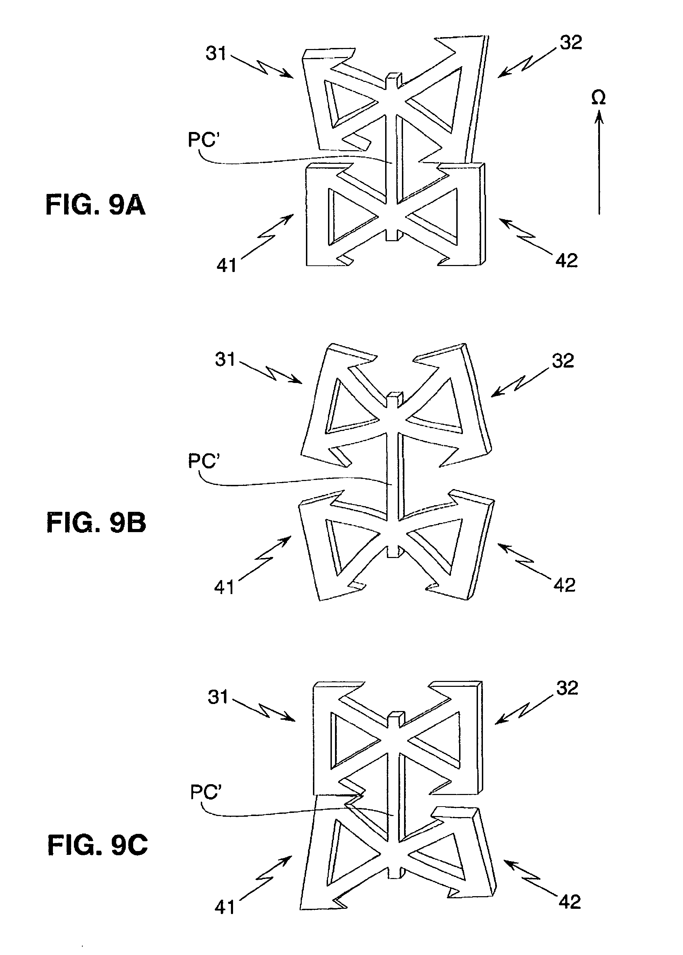

De même que le gyromètre 100, le gyromètre 200 présente trois modes particuliers de vibration, ainsi qu'illustré aux **figures 9A, 9B et 9C** limitées aux quatre éléments vibrants et à leur partie commune PC'.

Le mode pilote du gyromètre 200 ne met pratiquement en mouvement que deux éléments 31 et 32 vibrant en opposition de phase entre eux suivant leur premier mode utile ainsi que représenté à la figure 9A. Le mode détecteur met en mouvement les quatre éléments vibrant suivant leur second mode utile, les éléments 31 et 32 vibrant en opposition de phase respectivement avec les éléments 41 et 42 ainsi que représenté à la figure 9B. Les fréquences du mode pilote et du mode détecteur sont proches l'une de l'autre. Le troisième mode de vibration particulier illustré à la figure 9C ne met pratiquement en mouvement que les deux éléments 41 et 42 vibrant en opposition de phase à une fréquence écartée d'au moins 10% de la fréquence du mode pilote.

De même que pour le gyromètre 100, des électrodes adhérentes au matériau piézoélectrique sont disposées sur les deux grandes faces de la plaque. Comme montré à la figure 10, les électrodes sont réparties en deux systèmes d'électrodes d'excitation 71 et 72 sur les poutres des premiers éléments vibrants 31 et 32 et deux systèmes d'électrodes de détection 73 et 74 sur les poutres des deuxièmes éléments vibrants 41 et 42. Aucune électrode n'est supportée par les parties massives 2' des éléments vibrants. La **figure 10** montre une disposition des électrodes sur l'une desdites grandes faces, la disposition des électrodes sur l'autre grande face étant géométriquement identique mais pouvant selon le mode utile considéré se différencier par des polarités électriques différentes.

Chacune des poutres des éléments vibrants du gyromètre 200 étant orientée suivant un axe mécanique respectif du quartz et travaillant principalement en flexion, les faces des poutres des éléments 31 et 32 supportent une configuration d'électrodes connue à deux rubans conducteurs 71 et 72, afin d'exciter sélectivement le mode pilote pour lequel les poutres des éléments 31 et 32 vibrent perpendiculairement au plan de la plaque. Les faces des poutres des éléments 41 et 42 supportent une configuration d'électrodes connue à trois rubans conducteurs 73 et 74 afin de détecter sélectivement le mode détecteur pour lequel les poutres des éléments 41 et 42 vibrent parallèlement au plan de la plaque. Afin de faciliter la compréhension de la figure 10, il doit être entendu que des électrodes désignées par le même numéro de référence sont reliées entre elles par des connexions électriques (non représentées).

Pour la configuration connue à deux rubans, deux électrodes non superposées 71, ou 72, sur les faces d'une poutre d'un élément 31, 32 sont reliées. Deux électrodes d'excitation 71 ou 72 s'étendant longitudinalement sur une grande face de deux poutres sensiblement colinéaires des éléments 31 et 32 sont sensiblement colinéaires et reliées.

Pour la configuration connue à trois rubans, chacune des faces d'une poutre supporte trois électrodes de détection parallèles s'étendant longitudinalement. Ces trois électrodes sont deux électrodes de bordure bordant les flancs de la poutre et une électrode centrale située entre les électrodes de bordure. Les quatre électrodes de bordure sur les faces de la poutre sont superposées deux à deux. Les deux électrodes centrales sur les faces de la poutre sont aussi superposées. Les huit électrodes de bordure 73 sur deux premières poutres sensiblement colinéaires des éléments 41 et 42 sont reliées et respectivement sensiblement colinéaires deux à deux. Les quatre électrodes centrales 74 sur les deux premières poutres des éléments 41 et 42 sont reliées et respectivement sensiblement colinéaires deux à deux. Huit électrodes de bordure 74 et quatre électrodes centrales 73 sur deux deuxièmes poutres sensiblement colinéaires des éléments 41 et 42 sont agencées de la même manière que les huit électrodes de bordure 73 et les quatre électrodes centrales 74 sur les premières poutres des éléments 41 et 42. Les huit électrodes de bordure 73 sur les premières poutres sont reliées aux quatre électrodes centrales 73 des deuxièmes poutres, et les huit électrodes de bordure 74 sur les deuxièmes poutres sont reliées aux quatre électrodes centrales 74 des premières poutres.

Le gyromètre 200 permet, par rapport au gyromètre 100, d'augmenter les charges électriques induites par la rotation à mesurer, et ainsi d'améliorer la précision de la mesure gyrométrique, c'est-à-dire de la mesure de l'amplitude de vibration du mode détecteur proportionnelle à la vitesse angulaire de rotation Ω. Pour le mode pilote et le mode détecteur du gyromètre 200, la contrainte mécanique principale est la contrainte T_{YY} d'extension-compression des fibres longitudinales alternativement tendues et comprimées des poutres vibrant en flexion. Les systèmes d'électrodes connus à deux et trois rubans permettent d'exploiter piézoélectriquement cette contrainte de façon optimale, c'est-à-dire les électrodes 71 et 72 supportées par les éléments vibrants 31 et 32 permettent d'exciter le mode pilote avec une faible tension électrique entre elles, comme pour le gyromètre 100, et les électrodes de détection 73 et 74 supportées par les éléments vibrants 41 et 42 permettent de détecter beaucoup plus de charges induites par les accélérations de Coriolis, comparativement à la détection au moyen du gyromètre 100. La quantité de charges induites par les accélérations de Coriolis et donc la précision de la mesure gyrométrique avec le gyromètre 200 sont ainsi plusieurs fois supérieures à celles avec le gyromètre 100.

## Revendications

1. Elément vibrant en matériau piézoélectrique usinable par voie chimique, présentant des premier et deuxième modes de vibration et ayant une structure monolithique d'épaisseur uniforme et plane parallèlement à un axe cristallographique électrique (X) du matériau, et comportant une poutre sensiblement parallélépipédique (1; 1a, 1b) supportant des électrodes (61, 62; 63, 64; 71, 72; 73, 74) aptes à participer à l'un des deux modes de vibration, une partie fixe (PF; PF') solidaire de l'une des extrémités de la poutre, et une partie massive (2; 2') solidaire de l'autre extrémité de la poutre, la partie massive étant propre à être animée d'un déplacement alternatif parallèlement au plan de la structure monolithique suivant le deuxième mode de vibration, **caractérisé en ce que** la structure présente un axe de symétrie (3; 3') parallèle à l'axe cristallographique électrique (X), et la partie massive (2; 2') a un centre de gravité situé sur l'axe de symétrie, et est propre à être animée d'une rotation alternative autour de l'axe de symétrie suivant le premier mode de vibration.

2. Elément vibrant conforme à la revendication 1, dans lequel la partie massive (2) comprend deux branches symétriques par rapport à l'axe de symétrie (3) et ayant des extrémités solidaires de ladite autre extrémité de la poutre (1), et le centre de gravité de la partie massive est situé sur l'axe de symétrie (3) entre les extrémités de la poutre.

3. Elément vibrant conforme à la revendication 2, dans lequel la poutre (1) a une dimension de section prise dans le plan de la plaque comprise entre 1,3 et 2 fois environ son autre dimension de section, et une longueur comprise entre 4 et 5 fois environ ladite autre dimension de section.

4. Elément vibrant conforme à la revendication 1, comportant une autre poutre supportant d'autres électrodes, les deux poutres (1a, 1b) étant sensiblement parallélépipédiques, symétriques par rapport à l'axe de symétrie (3') et ayant des extrémités solidaires entre elles et de la partie fixe (PF') et d'autres extrémités solidaires de la partie massive (2').

5. Elément vibrant conforme à la revendication 4, dans lequel chacune des poutres (1a, 1b) a une dimension de section prise dans le plan de la plaque comprise entre 1,1 et 1,5 fois environ son autre dimension de section, et une longueur comprise entre 4 et 6 fois environ ladite autre dimension de section.

6. Elément vibrant conforme à la revendication 4, dans lequel les poutres (1a, 1b) forment un angle de 60° environ.

7. Elément vibrant conforme à l'une quelconque des revendications 1 à 6, **caractérisé en ce que** les premier et deuxième modes de vibration ont des fréquences de résonance sensiblement égales.

8. Elément vibrant conforme à l'une quelconque des revendications 1 à 7, dans lequel le matériau piézoélectrique appartient à la classe de symétrie cristalline 32.

9. Gyromètre **caractérisé en ce qu'**il comprend deux premiers éléments vibrants (11, 12) sensiblement identiques conformes à l'une quelconque des revendications 2 ou 3, ayant des poutres colinéaires (1) et supportant des électrodes (61, 62) pour participer au premier mode de vibration, et
deux deuxièmes éléments vibrants (21, 22) sensiblement identiques conformes à l'une quelconque des revendications 2 ou 3, ayant des poutres colinéaires (1) et supportant des électrodes (63, 64) pour participer au deuxième mode de vibration,
les parties fixes des éléments vibrants comprenant ensemble une partie commune centrale (PC) reliant des extrémités des poutres des premiers éléments vibrants et des extrémités des poutres des deuxièmes éléments vibrants, et des bras souples (BS) reliant la partie commune (PC) à une partie de fixation (CF).

10. Gyromètre conforme à la revendication 9, **caractérisé en ce que**
les électrodes supportées par chacune des faces de la poutre (1) de chaque premier élément vibrant (11, 12) sont des première et deuxième électrodes longitudinales (61, 62) respectivement superposées aux deuxième et première électrodes (62, 61) sur l'autre face de la poutre et respectivement colinéaires à des première et deuxième électrodes sur l'autre premier élément vibrant (12, 11), les quatre premières électrodes étant reliées entre elles et les quatre deuxièmes électrodes étant reliées entre elles, et
les électrodes supportées par chacune des faces de la poutre (1) de chaque deuxième élément vibrant (21, 22) sont des troisième et quatrième électrodes longitudinales (63, 64) respectivement superposées aux troisième et quatrième électrodes (63, 64) sur l'autre face de la poutre et respectivement colinéaires à des quatrième et troisième électrodes (64, 63) sur l'autre deuxième élément vibrant (22, 21), les quatre troisièmes électrodes étant reliées entre elles et les quatre quatrièmes électrodes étant reliées entre elles.

11. Gyromètre **caractérisé en ce qu'**il comprend deux premiers éléments vibrants (31, 32) sensiblement identiques conformes à l'une quelconque des revendications 4 à 6, les poutres des premiers éléments vibrants étant deux à deux sensiblement colinéaires et supportant des électrodes (71, 72) pour participer au premier mode de vibration, et
deux deuxièmes éléments vibrants (41, 42) sensiblement identiques conformes à l'une quelconque des revendications 4 à 6 les poutres des deuxièmes éléments vibrants étant deux à deux sensiblement colinéaires et supportant des électrodes (73, 74) pour participer au deuxième mode de vibration,
les parties fixes des éléments vibrants comprenant ensemble une partie commune centrale (PC') reliant des extrémités des poutres des premiers éléments vibrants et des extrémités des poutres des deuxièmes éléments vibrants, et des bras souples (BS') reliant la partie commune (PC') à une partie de fixation (CF').

12. Gyromètre conforme à la revendication 11, **caractérisé en ce que**
les faces d'une poutre (1a, 1b) de chaque premier élément vibrant (31, 32) supportent longitudinalement des premières électrodes parallèles (71) et des deuxièmes électrodes parallèles (72), une première électrode (71) sur une face de la poutre de chaque premier élément vibrant est superposée à une deuxième électrode (72)sur l'autre face de la poutre, les premières électrodes sur deux poutres sensiblement colinéaires des premiers éléments vibrants sont sensiblement colinéaires deux à deux, les deuxièmes électrodes sur deux poutres sensiblement colinéaires des premiers éléments vibrants sont sensiblement colinéaires deux à deux, les huit premières électrodes sont reliées entre elles et les huit deuxièmes électrodes sont reliées entre elles,
chacune des faces d'une poutre (1a, 1b) d'un deuxième élément vibrant (41, 42) supporte trois électrodes parallèles s'étendant longitudinalement (73, 74), lesdites trois électrodes d'une poutre sont deux troisièmes électrodes bordant les flancs de la poutre et une quatrième électrode située entre les troisièmes électrodes, les quatre troisièmes électrodes sur les faces d'une poutre sont superposées deux à deux, les deux quatrièmes électrodes sur les faces d'une poutre sont superposées, les huit troisièmes électrodes (73) sur deux premières poutres sensiblement colinéaires des deuxièmes éléments vibrants (41, 42) sont reliées et respectivement sensiblement colinéaires deux à deux, les quatre quatrièmes électrodes (74) sur les deux premières poutres des deuxièmes éléments vibrants (41, 42) sont reliées et respectivement sensiblement colinéaires deux à deux, huit troisièmes électrodes (74) et quatre quatrièmes électrodes (73) sur deux deuxièmes poutres sensiblement colinéaires des deuxièmes éléments vibrants (41, 42) sont agencées de la même manière que les huit troisièmes électrodes (73) et les quatre quatrièmes électrodes (74) sur les premières poutres des deuxièmes éléments vibrants, et
les huit troisièmes électrodes (73) sur les premières poutres des deuxièmes éléments vibrants sont reliées aux quatre quatrièmes électrodes (73) des deuxièmes poutres des deuxièmes éléments vibrants, et les huit troisièmes électrodes (74) sur les deuxièmes poutres sont reliées aux quatre quatrièmes électrodes (74) des premières poutres des deuxièmes éléments vibrants.

13. Gyromètre conforme à l'une quelconque des revendications 9 à 12, **caractérisé en ce que** les premiers éléments vibrants (11, 12; 31, 32) sont différents des deuxièmes éléments vibrants (21, 22; 41, 42).

14. Gyromètre conforme à l'une quelconque des revendications 9 à 13, **caractérisé en ce que** les premiers modes de vibration des premiers et deuxièmes éléments vibrants ont des fréquences de résonance différentes, et les deuxièmes modes de vibration des premiers et deuxièmes éléments vibrants ont des fréquences de résonance sensiblement égales.

## Claims

1. A vibrating element made in a piezoelectric material machinable through a chemical way, having first and second modes of vibration and having a monolithic structure with a uniform thickness and being planar parallelly to an electric crystallographic axis (X) of the material, and including a substantially parallelepipedic beam (1; 1a; 1b) supporting electrodes (61, 62; 63, 64; 71, 72; or 73, 74) able to take part in one of the two modes of vibration, a fixed part (PF; PF') fastened to one of the ends of the beam, and a mass part (2; 2') fastened to the other end of the beam, the mass part being able to move with an alternating displacement parallel to the plane of the monolithic structure following the second mode of vibration, is **characterized in that** the structure has a symmetry axis (3; 3') parallel to the electric crystallographic axis (X), and the mass part (2; 2') has a center of gravity located on the symmetry axis and is able to move with an alternating rotation about the symmetry axis following the first mode of vibration.

2. A vibrating element according to claim 1, wherein the mass part (2) includes two branches symmetric about the symmetry axis (3) and having ends fastened to said other end of the beam (1), and the gravity center of the mass part is located on the symmetry axis (3) between the ends of the beam.

3. A vibrating element according to claim 2, wherein the beam (1) has a cross-sectional dimension taken in the plane of the plate lying between about 1.3 times and about twice its other cross-sectional dimension, and a length lying between about 4 times and about 5 times said other cross-sectional dimension.

4. A vibrating element according to claim 1, including another beam supporting other electrodes, the two beams (1a, 1b) being substantially parallelepipedic, symmetric about the symmetry axis (3') and having ends fastened therebetween and to the fixed part (PF') and other ends fastened to the mass part (2').

5. A vibrating element according to claim 4, wherein each one of
the beams (1a, 1b) has a cross-sectional dimension taken in the plane of the plate lying between about 1.1 times and about 1.5 times its other cross-sectional dimension, and a length lying between about 4 times and about 6 times said other cross-sectional dimension.

6. A vibrating element according to claim 4, wherein the beams (1 a, 1 b) form an angle of approximately 60°.

7. A vibrating element according to any one of claims 1 to 6, **characterized in that** the first and second modes of vibration have substantially equal resonant frequencies.

8. A vibrating element according to any one of claims 1 to 7, wherein the piezoelectric material belongs to the crystal symmetry class 32.

9. A gyrometer **characterized in that** it includes
two first substantially identical vibrating elements (11, 12) according to any one of claims 2 or 3, having colinear beams (1) and supporting electrodes (61, 62) for taking part in the first mode of vibration, and
two substantially identical second vibrating elements (21, 22) according to any one of claims 2 or 3, having colinear beams (1) and supporting electrodes (63, 64) for taking part in the second mode of vibration,
the fixed parts of the vibrating elements including together a central common part (PC) connecting ends of the beams of the first vibrating elements and ends of the beams of the second vibrating elements, and flexible arms (BS) connecting the common part (PC) to a fastening part (CF).

10. A gyrometer according to claim 9, **characterized in that**
the electrodes supported by each of the faces of the beam (1) of each first vibrating element (11, 12) are first and second longitudinal electrodes (61, 62) respectively superposed to the second and first electrodes (62, 61) on the other face of the beam and respectively colinear to the first and second electrodes on the other first vibrating element (12, 11), the four first electrodes being connected therebetween and the four second electrodes being connected therebetween, and
the electrodes supported by each of the faces of the beam (1) of each second vibrating element (21, 22) are third and fourth longitudinal electrodes (63, 64) respectively superposed to third and fourth electrodes (63, 64) on the other face of the beam and respectively colinear to the fourth and third electrodes (64, 63) on the other second vibrating element (22, 21), the four third electrodes being connected therebetween and the four fourth electrodes being connected therebetween.

11. A gyrometer **characterized in that** it includes
two first substantially identical vibrating elements (31, 32) according to any one of claims 4 to 6, the beams of the first vibrating elements being two to two substantially colinear and supporting electrodes (71, 72) for taking part in the first mode of vibration, and
two substantially identical second vibrating elements (41, 42) according to any one of claims 4 to 6, the beams of the second vibrating elements being two to two substantially colinear and supporting electrodes (73, 74) for taking part in the second mode of vibration,
the fixed parts of the vibrating elements including together a central common part (PC') connecting ends of the beams of the first vibrating elements and ends of the beams of the second vibrating elements, and flexible arms (BS') connecting the common part (PC') to a fastening part (CF').

12. A gyrometer according to claim 11, **characterized in that** the faces of a beam (1 a, 1 b) of each first vibrating element (31, 32) longitudinally support first parallel electrodes (71) and second parallel electrodes (72), a first electrode (71) on a face of the beam of each first vibrating element is superposed to a second electrode (72) on the other face of the beam, the first electrodes on two substantially colinear beams of the first vibrating elements are substantially colinear two to two, the second electrodes on two substantially colinear beams of the first vibrating elements are substantially colinear two to two, the eight first electrodes are connected therebetween and the eight second electrodes are connected therebetween,
each one of the faces of a beam (1 a, 1 b) of a second vibrating element (41, 42) supports three parallel electrodes extending longitudinally (73, 74), said three electrodes of a beam are two third electrodes adjacent to the flanks of the beam and a fourth electrode is arranged between the third electrodes, the four third electrodes on the faces of a beam are superposed two to two, the two fourth electrodes on the faces of a beam are superposed, the eight third electrodes (73) on two first substantially colinear beams of the second vibrating elements (41, 42) are connected and respectively substantially colinear two to two, the four fourth electrodes (74) on the two first beams of the second vibrating elements (41, 42) are connected and respectively substantially colinear two to two, eight third electrodes (74) and four fourth electrodes (73) on two second substantially colinear beams of the second vibrating elements (41, 42) are arranged in the same manner as the eight third electrodes (73) and the four fourth electrodes (74) on the first beams of the second vibrating elements, and
the eight third electrodes (73) on the first beams of the second vibrating elements are connected to four fourth electrodes (73) of the second beams of the second vibrating elements, and the eight third electrodes (74) on the second beams of the second vibrating elements are connected to the four fourth electrodes (74) of the first beams of the second vibrating elements.

13. A gyrometer according to any one of claims 9 to 12, **characterized in that** the first vibrating elements (11, 12; 31, 32) are different from the second vibrating elements (21, 22; 41, 42).

14. A gyrometer according to any one of claims 9 to 13, **characterized in that** the first modes of vibration of the first and second vibrating elements have different resonant frequencies, and the second modes of vibration of the first and second vibrating elements have substantially equal resonant frequencies.

## Patentansprüche

1. Schwingungselement aus chemisch bearbeitbarem piezoelektrischem Material, das eine erste und eine zweite Schwingungsform aufweist und eine monolithische Struktur mit gleichförmiger Dicke aufweist, die parallel zu einer elektrischen kristallografischen Achse (X) des Materials eben ist, und einen im Wesentlichen parallelepipedischen Balken (1; 1a, 1b), der Elektroden (61, 62; 63, 64; 71, 72; 73, 74) trägt, die dafür geeignet sind, an einer der zwei Schwingungsformen teilzunehmen, einen festen Abschnitt (PF, PF'), der fest mit einem der Enden des Balkens verbunden ist, und einen massiven Abschnitt (2; 2') aufweist, der fest mit dem anderen Ende des Balkens verbunden ist, wobei der massive Abschnitt dafür geeignet ist, gemäß der zweiten Schwingungsform zu einer wechselnden Verlagerung parallel zur Ebene der monolithischen Struktur angeregt zu werden, **dadurch gekennzeichnet, dass** die Struktur eine Symmetrieachse (3; 3') aufweist, die parallel zur elektrischen kristallographischen Achse (X) ist, und der massive Abschnitt (2; 2') einen Schwerpunkt aufweist, der sich auf der Symmetrieachse befindet und dafür geeignet ist, gemäß der ersten Schwingungsform zu einer wechselnden Drehung um die Symmetrieachse angeregt zu werden.

2. Schwingungselement nach Anspruch 1, wobei der massive Abschnitt (2) zwei Schenkel umfasst, die in Bezug zur Symmetrieachse (3) symmetrisch sind und Enden aufweisen, die fest mit dem anderen Ende des Balkens (1) verbunden sind, und der Schwerpunkt des massiven Abschnitts sich auf der Symmetrieachse (3) zwischen den Enden des Balkens befindet.

3. Schwingungselement nach Anspruch 2, wobei der Balken (1) in der Ebene der Platte eine Querschnittsabmessung aufweist, die ungefähr zwischen dem 1,3- und 2-fachen seiner anderen Querschnittsabmessung beträgt, und eine Länge aufweist, die ungefähr zwischen dem 4- und 5-fachen der anderen Querschnittsabmessung beträgt.

4. Schwingungselement nach Anspruch 1, das einen anderen Balken aufweist, der andere Elektroden trägt, wobei die zwei Balken (1a, 1b) im Wesentlichen parallelepipedisch und in Bezug zur Symmetrieachse (3') symmetrisch sind und Enden, die untereinander und mit dem festen Abschnitt (PF') fest verbunden sind, und andere Enden aufweisen, die fest mit dem massiven Abschnitt (2') verbunden sind.

5. Schwingungselement nach Anspruch 4, wobei jeder der Balken (1a, 1b) in der Ebene der Platte eine Querschnittsabmessung aufweist, die ungefähr zwischen dem 1,1- und dem 1,5-fachen seiner anderen Querschnittsabmessung beträgt, und eine Länge aufweist, die ungefähr zwischen dem 4- und 6-fachen der anderen Querschnittsabmessung beträgt.

6. Schwingungselement nach Anspruch 4, wobei die Balken (1a, 1b) einen Winkel von ungefähr 60° bilden.

7. Schwingungselement nach einem der Ansprüche 1 bis 6, **dadurch gekennzeichnet, dass** die erste und die zweite Schwingungsform im Wesentlichen gleiche Resonanzfrequenzen aufweisen.

8. Schwingungselement nach einem der Ansprüche 1 bis 7, wobei das piezoelektrische Material der kristallinen Symmetrieklasse 32 angehört.

9. Gyrometer, das **dadurch gekennzeichnet ist, dass** es Folgendes umfasst:
zwei erste, im Wesentlichen identische Schwingungselemente (11, 12) nach einem der Ansprüche 2 oder 3, die kollineare Balken (1) aufweisen und Elektroden (61, 62) tragen, um an der ersten Schwingungsform teilzunehmen, und
zwei zweite, im Wesentlichen identische Schwingungselemente (21, 22) nach einem der Ansprüche 2 oder 3, die kollineare Balken (1) aufweisen und Elektroden (63, 64) tragen, um an der zweiten Schwingungsform teilzunehmen,
wobei die festen Abschnitte der Schwingungselemente zusammen einen gemeinsamen mittleren Abschnitt (PC), der Enden der Balken der ersten Schwingungselemente und Enden der Balken der zweiten Schwingungselemente verbindet, und biegsame Arme (BS) umfassen, die den gemeinsamen Abschnitt (PC) mit einem Befestigungsabschnitt (CF) verbinden.

10. Gyrometer nach Anspruch 9, **dadurch gekennzeichnet, dass**:
die von jeder der Seiten des Balkens (1) von jedem ersten Schwingungselement (11, 12) getragenen Elektroden erste und zweite Längselektroden (61, 62) sind, die auf der zweiten beziehungsweise ersten Elektrode (62, 61) auf der anderen Seite des Balkens übereinander liegen und kollinear mit ersten beziehungsweise zweiten Elektroden auf dem anderen ersten Schwingungselement (12, 11) sind, wobei die vier ersten Elektroden untereinander verbunden sind und die vier zweiten Elektroden untereinander verbunden sind, und die durch jede der Seiten des Balkens (1) von jedem zweiten Schwingungselement (21, 22) getragenen Elektroden dritte und
vierte Längselektroden (63, 64) sind, die auf den dritten beziehungsweise vierten Elektroden (63, 64) auf der anderen Seite des Balkens übereinander liegen und kollinear mit vierten beziehungsweise dritten Elektroden (64, 63) auf dem anderen zweiten Schwingungselement (22, 21) sind, wobei die vier dritten Elektroden untereinander verbunden sind und die vier vierten Elektroden untereinander verbunden sind.

11. Gyrometer, das **dadurch gekennzeichnet ist, dass** es Folgendes umfasst:
zwei erste, im Wesentlichen identische Schwingungselemente (31, 32) nach einem der Ansprüche 4 bis 6, wobei die Balken der ersten Schwingungselemente paarweise im Wesentlichen kollinear sind und Elektroden (71, 72) tragen, um an der ersten Schwingungsform teilzunehmen, und
zwei zweite, im Wesentlichen identische Schwingungselemente (41, 42) nach einem der Ansprüche 4 bis 6, wobei die Balken der zweiten Schwingungselemente paarweise im Wesentlichen kollinear sind und Elektroden (73, 74) tragen, um an der zweiten Schwingungsform teilzunehmen,
wobei die festen Abschnitte der Schwingungselemente zusammen einen gemeinsamen mittleren Abschnitt (PC'), der Enden der Balken der ersten Schwingungselemente und Enden der Balken der zweiten Schwingungselemente verbindet, und biegsame Arme (BS') umfassen, die den gemeinsamen Abschnitt (PC') mit einem Befestigungsabschnitt (CF') verbinden.

12. Gyrometer nach Anspruch 11, **dadurch gekennzeichnet, dass**:
die Seiten eines Balkens (1a, 1b) von jedem ersten Schwingungselement (31, 32) in Längsrichtung erste parallele Elektroden (71) und zweite parallele Elektroden (72) tragen, eine erste Elektrode (71) auf einer Seite des Balkens von jedem ersten Schwingungselement über einer zweiten Elektrode (72) auf der anderen Seite des Balkens liegt, die ersten Elektroden auf den zwei im Wesentlichen kollinearen Balken der ersten Schwingungselemente im Wesentlichen paarweise kollinear sind, die zweiten Elektroden auf zwei Balken, die im Wesentlichen kollinear mit ersten Schwingungselementen sind, paarweise im Wesentlichen kollinear sind, die acht ersten Elektroden untereinander verbunden sind und die acht zweiten Elektroden untereinander verbunden sind,
jede der Seiten eines Balkens (1a, 1 b) von einem zweiten Schwingungselement (41, 42) drei parallele Elektroden (73, 74) trägt, die sich in Längsrichtung erstrecken, die drei Elektroden eines Balkens zwei dritte Elektroden sind, welche die Flanken des Balkens und eine vierte Elektrode, die sich zwischen den dritten Elektroden befindet, einfassen, die vier dritten Elektroden auf den Seiten eines Balkens paarweise übereinander liegen, die zwei vierten Elektroden auf den Seiten eines Balkens übereinander liegen, die acht dritten Elektroden (73) auf zwei ersten Balken, die im Wesentlichen kollinear zu den zweiten Schwingungselementen (41, 42) sind, verbunden sind und jeweils paarweise im Wesentlichen kollinear sind, die vier vierten Elektroden (74) auf den zwei ersten Balken der zweiten Schwingungselemente (41, 42) verbunden sind und jeweils paarweise kollinear sind, acht dritte Elektroden (74) und vier vierte Elektroden (73) auf zwei zweiten Balken, die im Wesentlichen kollinear mit den zweiten Schwingungselementen (41, 42) sind, auf dieselbe Weise wie die acht dritten Elektroden (73) und die vier vierten Elektroden (74) auf den ersten Balken der zweiten Schwingungselemente angeordnet sind, und
die acht dritten Elektroden (73) auf den ersten Balken der zweiten Schwingungselemente mit den vier vierten Elektroden (73) der zweiten Balken der zweiten Schwingungselemente verbunden sind, und
die acht dritten Elektroden (74) auf den zweiten Balken mit den vier vierten Elektroden (74) der ersten Balken der zweiten Schwingungselemente verbunden sind.

13. Gyrometer nach einem der Ansprüche 9 bis 12, **dadurch gekennzeichnet, dass** die ersten Schwingungselemente (11, 12; 31, 32) sich von den zweiten Schwingungselementen (21, 22; 41, 42) unterscheiden.

14. Gyrometer nach einem der Ansprüche 9 bis 13, **dadurch gekennzeichnet, dass** die ersten Schwingungsformen der ersten und zweiten Schwingungselemente unterschiedliche Resonanzfrequenzen aufweisen und die zweiten Schwingungsformen der ersten und zweiten Schwingungselemente im Wesentlichen gleiche Resonanzfrequenzen aufweisen.
